# EUROPEAN PATENT APPLICATION

(11) **EP 4 737 723 A1**
(43) Date of publication of application: **06.05.2026**
(21) Application number: 24210451.1
(22) Date of filing: 04.11.2024
(51) Int. Cl.: F04B 35/04, F04B 39/00, F04B 39/12, F16F 1/04

(54) **LINEAR COMPRESSOR, COOLING SYSTEM, AND HOUSEHOLD APPLIANCE**

(71) Applicant: BSH Hausgeräte GmbH, 81739 München (DE); Robert Bosch GmbH, 70442 Stuttgart (DE)
(72) Inventor: Oravec, Matej, 07101 Michalovce (SK); Kovac, Daniel, 04011 Kosice (SK); Roetzer, Marco, 78736 Epfendorf (DE)

(57) **Abstract**

Disclosed is a linear compressor 100, 100' comprising a cylinder component 3, 3' and a piston 5 extending into an inner space of the cylinder component. The linear compressor 100, 100' further comprises a linear motor 1 configured to generate a reciprocation of the cylinder component 3 and the piston 5 relative to each other, and a spring system 4, 4', 4", 4‴ configured to elastically cushion said reciprocation. Therein, a stiffness of the spring system 4, 4', 4", 4‴ depends on a deflection thereof.

Further disclosed are a cooling system and a household appliance respectively comprising such linear compressor 100, 100'.

## Description

The present invention concerns a linear compressor. The invention further is directed to a cooling system and a household appliance respectively comprising such linear compressor.

According to conventional construction, a linear compressor typically comprises a piston and a cylinder component which together enclose a compression space at a bottom of the cylinder component. A linear motor is configured to linearly reciprocate the piston and the cylinder component relative to each other in a direction of a centre axis of the cylinder component and, thereby varying a volume of the compression space. Such linear compressor may in particular be included in a cooling system.

Typically, the linear compressor is powered by synchronous input voltage, i.e., by an alternating current whose maximum and minimum have the same absolute value. Such driven, the movement of the piston relative to the cylinder component is synchronous, too. In applications in which the compressor forms part of a cooling system, such symmetric mode is commonly used for lower cooling capacity, and it ensures a quite stable state of the whole cooling circuit.

To boost the mass flow rate of the linear compressor (such as, in respective applications, in order to increase a cooling power thereof), the alternating current driving the linear motor is conventionally supplemented by a direct current. Thereby, an asymmetric current is generated which causes an offset in the movement of the piston and the cylinder component relative to each other, meaning that maximum and minimum amplitudes thereof are different.

Due to such asymmetric current, however, high power losses occur, such that the efficiency of the whole system is reduced. Moreover, to introduce the direct current and to control the resulting signals according to said conventional approach, a complex control system is required.

It is an object of the present invention to provide an improved linear compressor, an improved cooling system, and an improved household appliance.

The objects are achieved with a linear compressor according to claim 1, with a cooling system according to claim 5, and with a household appliance according to claim 6. Advantageous embodiments are disclosed in the dependent claims, the description, and the figures.

A linear compressor according to the present invention comprises a piston and a cylinder component whose cylinder wall at least partially encompasses the piston. The linear compressor further comprises a linear motor which is configured to generate a reciprocation of the cylinder component and the piston relative to each other. As is to be understood, in operation of the linear compressor, such reciprocation causes a compression space formed between the piston and the cylinder component to alternatingly expand or diminish.

The linear compressor further comprises a spring system which is configured elastically cushion said reciprocation. Therein, the spring system has a stiffness (thus, a resistance to load) which depends on a deflection of the spring system.

In particular, such varying stiffness may be achieved by the spring system comprising, for example, at least one non-linear spring and/or two (or more) springs a second one of which comes into effect (i.e., is deflected) only after a first one of the springs exceeds a predetermined deflection.

The spring system's stiffness thus depends on a position of the cylinder component and the piston relative to each other. Accordingly, an offset of the movement of the piston and the cylinder component relative to each other can be generated mechanically, even with a synchronous alternating input voltage. As a consequence, by varying an input power, an asymmetry in the reciprocation can be generated, without introducing a direct current and, thereby, without causing a loss of efficiency and without needing a complex control system.

According to advantageous embodiments, the linear compressor is included or configured to be included in a cooling system. A cooling system according to the present invention comprises a linear compressor according to an embodiment of the present invention. In these cases, the linear compressor may in particular be configured to compress a refrigerant within its compression space. In particular, the cooling system may form part of a refrigerator, a freezer, or an air conditioner.

A household appliance according to the present invention comprises a linear compressor according to an embodiment of the present invention. In particular, the household appliance may comprise a cooling system according to the present invention. As specific examples, the household appliance may be a refrigerator, a freezer, or an air conditioner.

The spring system according to the present invention may comprise one or various tension spring/s and or one or various compression spring/s. It may in particular support the cylinder component and/or the piston against each other and/or (directly and/or via some further component) against a housing of the linear compressor.

According to advantageous embodiments, the spring system has a progressive spring characteristic. Its stiffness (resistance to load) may thus increase (continuously or stepwise) with its deflection. In particular, such progressive spring characteristic may have a smooth course or may include at least one knee.

Thereby, a resonance frequency of the linear compressor may be caused to raise with an increased deflection of the spring system. As a consequence, position amplitudes of the piston and the cylinder component relative to each other may be increased without introducing asymmetry to the input current, such that a mass flow rate of the linear compressor (and thereby, in respective applications, a cooling capacity of the cooling system) can be boosted. Moreover, such spring system may advantageously prevent the piston hitting the cylinder component's bottom in a mechanical way.

In what follows, preferred embodiments of the present invention are explained with respect to the accompanying drawings. As is to be understood, the various elements and components are depicted as examples only. They may be facultative and/or combined in a manner different than that depicted. Reference signs for related elements are used comprehensively and not defined again for each figure, and the same holds for evident analogies between the figures.

Shown is schematically in
- Fig. 1:: a longitudinal section of a linear compressor according to a first embodiment of the present invention;
- Fig. 2.: a longitudinal section of a linear compressor according to a second embodiment of the present invention;
- Fig. 3a:: an arrangement of a spring system of a linear compressor according to an alternative exemplary embodiment of the present invention;
- Fig. 3b:: an arrangement of a spring system of a linear compressor according to a further exemplary embodiment of the present invention; and
- Fig. 4:: effects of a spring system of an exemplary linear compressor according the present invention.

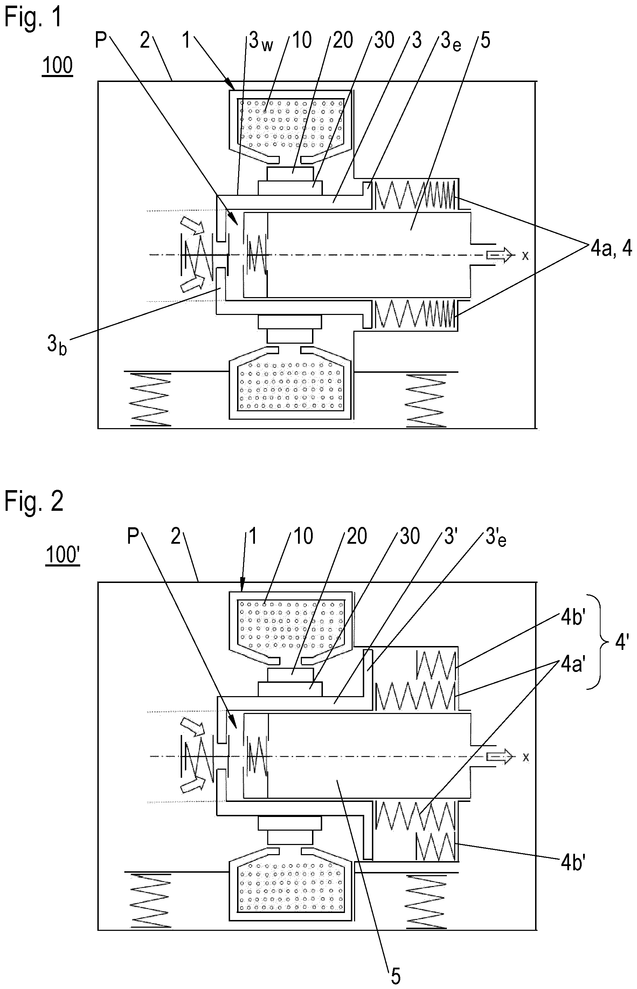

In Figure 1, a compressor 100 according to an exemplary embodiment of the present invention is depicted. The compressor 100 comprises a linear motor 1, a housing 2, a cylinder component 3, a spring system 4 elastically supporting the cylinder component 3 in the housing 2, and a piston 5 being stationary to the linear motor 1 and extending into an inner space of the cylinder component 3. In particular, the piston thus is partially encompassed by a cylinder wall of the cylinder component 3

Therein, Figure 1 shows the compressor 100 in a sectional view along a centre axis X of the cylinder component 3.

The linear motor 1 comprises a stator with a winding 10, a magnet component 20, and a yoke 30 coupled to the magnet component 20 and attached to the cylinder component 3.

The magnet component 20 and the yoke 30 each have an annular shape and are arranged, coaxial to each other and to a solenoid coil of the stator 10, around the centre axis X of the cylinder component 3.

The stator 10, the magnet component 20 and the yoke 30 together form a magnetic circuit. In consequence of alternating electric power input to the solenoid coil, a magnetic flux thus is generated and produces a linearly reciprocating motion of the magnet component 20, with the yoke 30 coupled thereto, relative to the stator 10 and in a direction parallel to the centre axis X mentioned above. As a consequence, the cylinder component 3 attached to the yoke 30 is reciprocated, within the housing 2, relative to the piston 5. Therein, the reciprocation is elastically cushioned by the spring system 4.

A compression space P is formed between a bottom 3_{b} of the cylinder component 3 and the piston 5. According to advantageous embodiments, in which the linear compressor 100 forms part of a cooling system, the compression space P may in particular contain a refrigerant (not shown in the figures) which may be compressed, by the movement of the cylinder component 3 relative to the piston 5, before being conveyed, through respective valves, out of the compression space P. Such possible flow is indicated, in Figure 1, by respective arrows.

In the embodiment schematically illustrated in Figure 1, the spring system 4 comprises a non-linear compression spring 4a having the same centre axis X as the cylinder component and being arranged around the piston 5, thereby striking against a radially projecting edge 3ₑ of the cylinder component; as is to be understood, the term "radially" relates to the centre axis X of the cylinder component.

It is to be noted that the spring system 4 of the linear compressor 100 may alternatively comprise various springs distributed around the piston 5 and respectively striking against the radially projecting edge 3ₑ.

In the embodiment shown, the spring 4a is configured as 2-stage non-linear spring having two merged regions with different respective stiffness, as illustrated by spikes having different widths.

Accordingly, when the cylinder component 3 is moved relative to the piston 5, so as to diminish the compression space P, at least from a certain position on (which may be reached when an input voltage has or exceeds a predetermined value), the spring system 4 has an increased stiffness (resistance to load). In particular, the stiffness of the spring system 4 therefore varies with (and thus depends on) a deflection thereof.

Thereby, an offset of the piston 5 relative to the cylinder component 3 is mechanically caused, the offset providing for an increased mass flow rate of the linear compressor. In applications in which the linear compressor 100 is included in a cooling system (not shown), a cooling capacity is thereby boosted.

Figure 2 depicts a linear compressor 100' according to another exemplary embodiment of the present invention. Therein, contrary to the linear compressor 100 shown in Figure 1, the linear compressor illustrated in Figure 2 comprises a spring system 4' comprising a first spring 4a' and a second spring 4b' which each are linear compression springs, have the same centre axis X as the cylinder component, and are arranged around the piston 5. The first spring 4a' is arranged within the second spring 4b', i.e., it runs through an open centre region thereof.

Moreover, in an un-loaded stage, the springs 4a', 4b' (which may have a same or different spring rate/s) have different axial lengths (i.e., lengths measured in the direction of the centre axis X). As a consequence, in the situation depicted in Figure 2, the radially inner first spring 4a' strikes against a radially projecting edge 3'ₑ of the cylinder component 3' while the radially outer second spring 4b' is spaced away from said edge 3'ₑ.

Accordingly, when the cylinder component 3' is moved relative to the piston 5, so as to diminish the compression space P, the second spring 4b' comes into effect only after the cylinder component 3 has reached a position, relative to the piston 5, in which the radially projecting edge 3'ₑ contacts the second spring 4b'; this position of the cylinder component 3 may be reached when an input voltage of the linear motor 1 has or exceeds a predetermined value.

During further movement of the cylinder component 3' (in a direction diminishing the compression space P), the stiffness of the spring system 4 thus results from the respective spring rates of both the first spring 4a' and the second spring 4b'. In particular, the stiffness of the spring system 4' thus varies with (i.e., depends on) a deflection thereof. More specifically, a spring characteristic of the spring system 4' is progressive with a knee.

As is to be understood, the spring system 4' of the linear compressor 100' may alternatively comprise various first springs distributed around the piston 5 and respectively striking against the radially projecting edge 3'ₑ, and/or various second springs distributed around the piston 5 and respectively striking against the radially projecting edge 3'e only after the cylinder component 3' has reached a predetermined position in which the first spring/s is/are deflected to a predetermined (non-zero) extent.

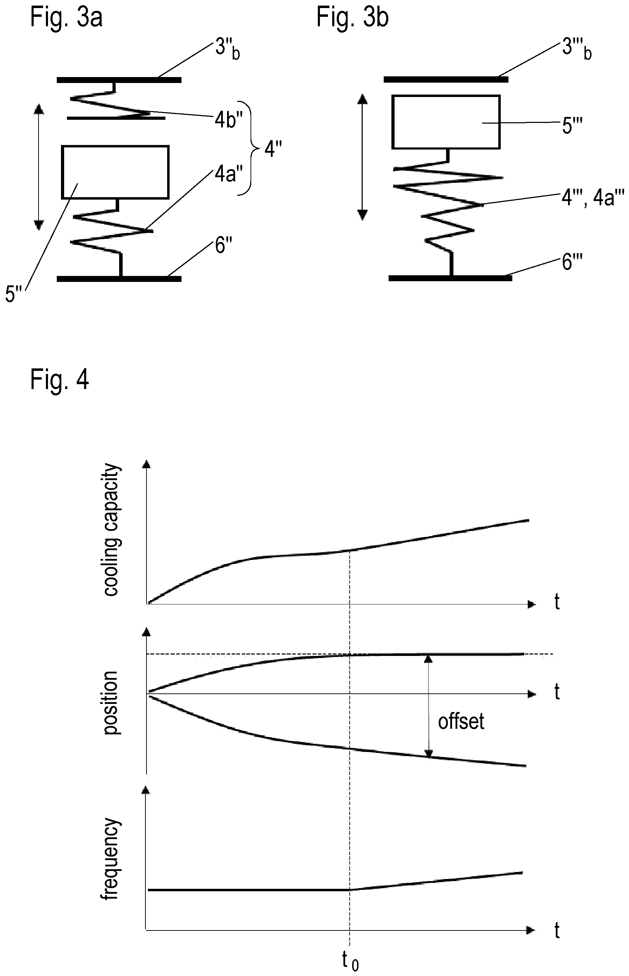

Figures 3a and 3b each schematically illustrate further embodiments of respective linear compressors according to the present invention, wherein only a respective piston 5", 5'", a respective bottom 3_{b}", 3_{b}‴ of a respective cylinder component, a respective spring system 4", 4'", and a respective portion of a component 6", 6‴ forming part of a housing or being installed therein is depicted. As indicated by respective double arrows, the piston 5", 5‴ in each case is configured to reciprocate relative to the respective bottom 3_{b}", 3_{b}‴ of the respective cylinder component. The respective spring system 4", 4‴ elastically cushions the reciprocation.

Therein, in case of Figure 3a, the spring system 4" comprises a first spring 4a" supporting the piston 5" against the component 6", and a second spring 4b" connected to the bottom 3_{b}" of the cylinder component. The first spring 4a" is a tension spring, and the second spring 4b" is a compression spring.

In the situation shown, only the first spring 4a" is effective. With a further movement of the piston 5" towards the bottom 3_{b}", however, the piston 5" will contact the second spring 4b", and with a continued displacement, the stiffness of the spring system 4" will result from the respective spring rates of both the first spring 4a" and the second spring 4b". In particular, the stiffness of the spring system 4 thus depends on a deflection thereof. More precisely, the spring system 4" is a two-stage spring system having a spring characteristic which is progressive with a knee.

In the embodiment illustrated in Figure 3b, the spring system 4‴ is formed by a single spring 4a‴ being a compression spring and supported against the component 6‴. As indicated by spikes of different widths, the spring 4a‴ is configured as 2-stage non-linear spring having two merged regions with different respective stiffnesses. As a consequence, a stiffness of the spring system 4‴ thus varies with a deflection thereof.

Figure 4 provides three correlating graphs illustrating respective effects of the spring system comprised by a linear compressor included in a cooling system according to the present invention. Therein, a cooling capacity of the cooling system, piston end positions relative to the cylinder component, and a resonance frequency are considered over time t.

As apparent from the graphs, after a time to at which the piston amplitude reaches a specific position relative to the cylinder component, the cooling capacity, an offset of the piston end positions, and the resonance frequency advantageously increase even without generation of a disadvantageous asymmetric current for driving the reciprocation.

Disclosed is a linear compressor 100, 100' comprising a cylinder component 3, 3' and a piston 5 extending into an inner space of the cylinder component. The linear compressor 100, 100' further comprises a linear motor 1 configured to generate a reciprocation of the cylinder component 3 and the piston 5 relative to each other, and a spring system 4, 4', 4", 4‴ configured to elastically cushion said reciprocation. Therein, a stiffness of the spring system 4, 4', 4", 4‴ depends on a deflection thereof.

Further disclosed are a cooling system and a household appliance respectively comprising such linear compressor 100, 100'.

### Reference signs

- 1: linear motor
- 2: housing
- 3: cylinder component
- 3_{b}, 3_{b}", 3_{b}‴: bottom of cylinder component
- 3ₑ, 3'ₑ: radially projecting edge of cylinder component
- 3,: cylinder wall of cylinder component
- 4, 4', 4", 4‴: spring system
- 4a', 4a": first spring
- 4b', 4b": second spring
- 4a, 4a‴: non-linear spring
- 5, 5", 5‴: piston
- 6", 6‴: component

- 10: stator
- 20: magnet component
- 30: yoke

- 100, 100': linear compressor

- P: compression space
- X: centre axis

## Claims

1. Linear compressor (100, 100') comprising
- a piston (5),
- a cylinder component (3, 3') whose cylinder wall (3_{w}) at least partially encompasses the piston (5'),
- a linear motor (1) configured to generate a reciprocation of the cylinder component (3) and the piston (5) relative to each other, and
- a spring system (4, 4', 4", 4‴) configured to elastically cushion said reciprocation,
**characterised in that**
a stiffness of the spring system (4, 4', 4", 4‴) depends on a deflection thereof.

2. Linear compressor according to claim 1, wherein the spring system (4, 4', 4", 4‴) comprises
- a first spring (4a', 4a"), and a second spring (4b', 4b") which is configured to be deflected, in the linear compressor, only when the first spring (4a', 4a") exceeds a predetermined deflection; and/or
- at least one non-linear spring (4a, 4a‴).

3. Linear compressor according to one of claims 1 or 2, wherein the spring system (4, 4', 4", 4‴) has a progressive spring characteristic.

4. Linear compressor according to claim 3, wherein the spring characteristic of the spring system (4', 4") is progressive with at least one knee.

5. Cooling system comprising a linear compressor (100, 100') according to one of the preceding claims.

6. Household appliance comprising a linear compressor (100, 100') according to one of claims 1 to 4.

7. Household appliance according to claim 6, which is a refrigerator, a freezer, or an air conditioner.
